# EUROPÄISCHE PATENTSCHRIFT

(11) **EP 3 117 428 B1**
(45) Veröffentlichungstag und Bekanntmachung des Hinweises auf die Patenterteilung: **28.11.2018**
(21) Anmeldenummer: 15781848.5
(22) Anmeldetag: 08.09.2015
(51) Int. Cl.: G10L 15/20, G10L 17/10, G08G 5/00

(54) **VERFAHREN ZUR IDENTIFIKATION UND PRÜFUNG VON SPRECHFUNKMELDUNGEN**
METHOD FOR IDENTIFYING AND VERIFYING RADIOTELEPHONY MESSAGES
PROCÉDÉ D'IDENTIFICATION ET DE VÉRIFICATION DE MESSAGES DE RADIOTÉLÉPHONIE

(30) Priorität: 09.09.2014 AT 506212014
(43) Veröffentlichungstag der Anmeldung: 18.01.2017
(73) Patentinhaber: Frequentis AG, 1100 Wien (AT)
(72) Erfinder: KLOPF, Markus, 3550 Langanlois (AT)
(74) Vertreter: Wildhack & Jellinek
(86) Internationale Anmeldenummer: PCT/AT2015/050217
(87) Internationale Veröffentlichungsnummer: WO 2016/037204

(56) Entgegenhaltungen:
- US-A1- 2010 106 503
- US-B1- 7 809 405
- LAWSON A D ET AL: "Automatic Speech Recognition Fusion Approach To Unsupervised Speaker Clustering And Labeling", 2006 IEEE AEROSPACE CONFERENCE; BIG SKY, MONTANA; MARCH 4 - 11, 2006, IEEE OPERATIONS CENTER, PISCATAWAY, NJ, 4. März 2006 (2006-03-04), Seiten 1-6, XP010928712, ISBN: 978-0-7803-9545-9
- Wade Shen ET AL: "A Comparison of Speaker Clustering and Speech Recognition Techniques for Air Situational Awareness", International Speech Communication Association - 8th Annual Conference of the International Speech Communication Association, Interspeech 2007, 27. August 2007 (2007-08-27), Seiten 2412-2415, XP055240868, Gefunden im Internet: URL:http://citeseerx.ist.psu.edu/viewdoc/d ownload;jsessionid=B691D465D9599DD2CB1D48E 10482F5EF?doi=10.1.1.362.4260&rep=rep1&typ e=pdf [gefunden am 2016-01-13]
- MICHAEL NEFFE ET AL: "Speaker Segmentation for Air Traffic Control", 13. September 2007 (2007-09-13), SPEAKER CLASSIFICATION II; [LECTURE NOTES IN COMPUTER SCIENCE], SPRINGER BERLIN HEIDELBERG, BERLIN, HEIDELBERG, PAGE(S) 177 - 191, XP019097513, ISBN: 978-3-540-74121-3 Zusammenfassung

## Beschreibung

Die Erfindung betrifft ein Verfahren zur Identifikation und Prüfung von Sprechfunkmeldungen gemäß dem Oberbegriff des Patentanspruches 1.

Weiters betrifft die Erfindung eine Vorrichtung zur Identifikation und Prüfung von Sprechfunkmeldungen gemäß dem Oberbegriff des Patentanspruches 3.

Schließlich betrifft die Erfindung einen Datenträger gemäß Anspruch 5.

Bei Kontrollzentralen mit Kommunikationssystemen ist eine automatisierte Detektion des jeweils sprechenden Kommunikationsteilnehmers wünschenswert. Insbesondere bei Kommunikationssystemen, bei denen ein Operator, z.B. Fluglotse, in einer Leitzentrale die jeweilige Position von Kommunikationsteilnehmern auf einem Monitor angezeigt erhält, ist es wünschenswert, dass bei Aufbau einer Sprechfunkkommunikation gleichzeitig auf dem Monitor, auf dem die Position des jeweiligen Sprechfunkteilnehmers angezeigt wird das jeweilige Symbol des Kommunikationsteilnehmers hervorgehoben werden kann. Dies erleichtert die Arbeit des Operators und kann durch eine bessere situative Wahrnehmung Fehler und Unstimmigkeiten vermeiden, die im Extremfall je nach Einsatzgebiet zu schweren Schäden führen können.

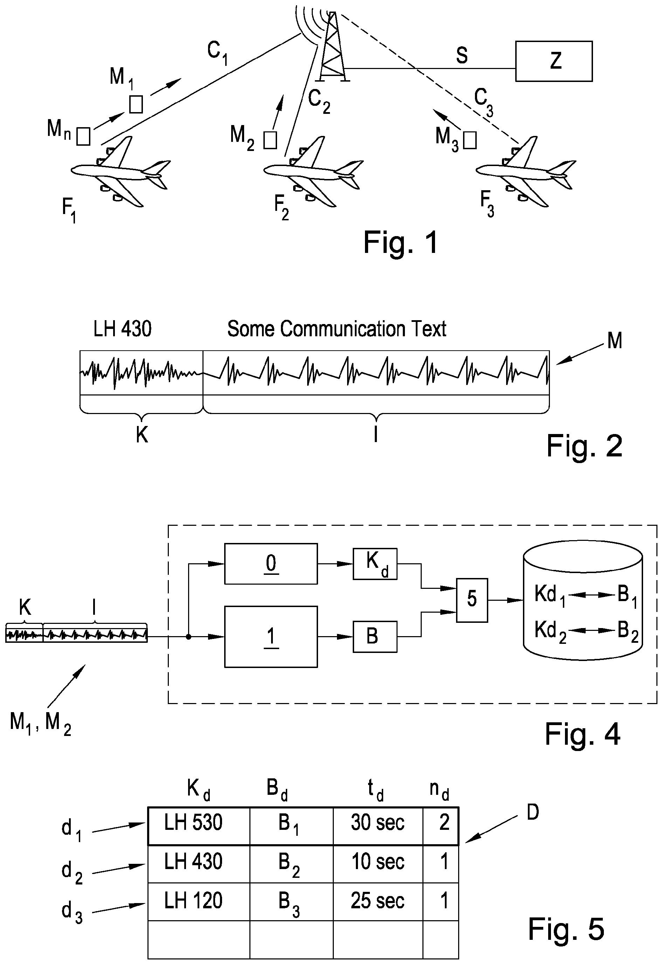

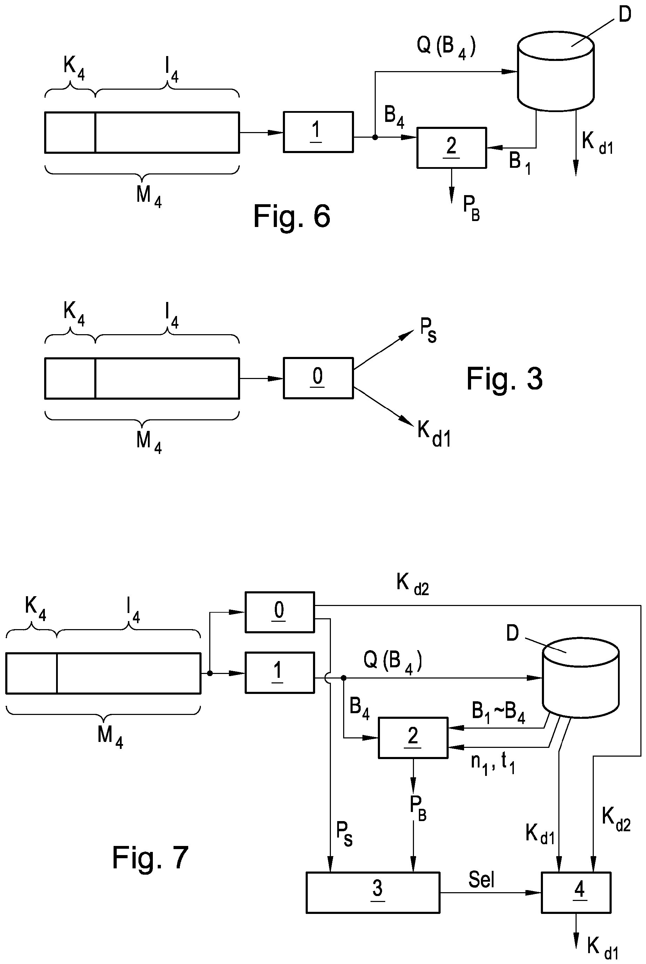

Typische bekannte Kommunikationssysteme wären beispielsweise im Bereich von Rettungs-, Feuerwehr-, Polizei-, Militär-, See-, oder Luftverkehrskommunikation eingesetzt. Eine typische Anwendung im Bereich des Luftverkehrs ist in Fig. 1 dargestellt. Der Funkverkehr zwischen einer Zentrale Z und den einzelnen Fahrzeugen F₁, F₂, F₃, im vorliegenden Fall Flugzeuge, wird über eine Funkdatenverbindung abgewickelt. Insbesondere übermitteln Sprecher, die sich in den Fahrzeugen F₁, F₂, F₃ befinden, Sprechfunkmeldungen M₁, M₂, M₃, M₄ über Funk an einen der Zentrale Z zugeordneten Empfangseinrichtung S, der die bei ihm einlangenden Sprechfunkmeldungen M₁, M₂, M₃ an die Zentrale weiterleitet. In der Zentrale Z langt eine Sprechfunkmeldung M ein, die eine an ihrem Anfang oder alternativ auch am Ende stehende Kennung K sowie eine Informationsteil oder Sprechfunkinhalt I aufweist. (**Fig. 2**)
Bei gängigen aus dem Stand der Technik Verfahren wird die Kennung, wie in **Fig. 3** dargestellt, digitalisiert und einer Spracherkennungseinheit 0 zugeführt, die aus der Kennung K eine digitalisierte Kennung K_{d} ermittelt. Zudem stellen aus dem Stand der Technik bekannte Verfahren auch einen Wahrscheinlichkeitswert P_{S} zur Verfügung, der angibt, mit welcher Wahrscheinlichkeit die digitalisierte Kennung K_{d} erkannt wurde.

Aus dem Stand der Technik ist es bekannt, Sprechfunkmeldungen einer Spracherkennung zu unterziehen. Hierbei wird eine Kennung, die typischerweise am Anfang jeder Sprechfunkmeldung steht, herangezogen und es wird aus dieser Kennung eine digitale Kennung erstellt, die den Inhalt dieser Kennung in digitalisierter Form enthält. So kann, wie in **Fig. 2** dargestellt, die Kennung K, die vor ihrer Erkennung lediglich in Form eines Sprechfunksignals vorliegt, in eine diesbezügliche digitale Kennung K_{d}, die im vorliegenden Fall den Wert "LH 430" aufweist, transformiert werden.

Der bekannte Stand der Technik wird anhand der **Fig. 1 bis 3** näher erläutert. **Fig. 1** zeigt ein bekanntes Sprechfunksystem. **Fig. 2** zeigt schematisch eine bei der Zentrale einlangende Sprechfunkmeldung. **Fig. 3** zeigt die Bestimmung einer digitalen Kennung gemäß dem Stand der Technik.

Die Patentschrift US 7,809,405 B1 "System and Method for Reducing Aviation Voice Communication Confusion" (T. W. Rand und S. R. Rathinam) offenbart ein Verfahren zur Zuordnung von Funksprüchen zu bestimmten Fahrzeugen, wobei Sprechererkennung eingesetzt wird, um unvollständige Funkkennungen anhand früher empfangener Funksprüche des selben Sprechers entsprechend zu ergänzen und korrekt zuzuordnen.

Aus A.D. Lawson et al.: "Automatic Speech Recognition Fusion Approach To Unsupervised Speaker Clustering and Labelling" (IEEE Aerospace Conference 2006) ist ein mehrstufiges System zur Zuordnung von Sprechern zu Funksprüchen bekannt, nachdem zuerst Funksprüche anhand von automatisch erkannten Kennung gruppiert werden, und Sprecheridentifikation zur Zuordnung jener Funksprüche eingesetzt wird, denen durch automatische Spracherkennung keine Kennung eindeutig zugeordnet werden konnte.

Ein wesentliches Problem dieser Vorgangsweise liegt darin, dass die Sprecher ihre Kennung mit einer bestimmten Wahrscheinlichkeit falsch aussprechen und dass die Spracherkennung, insbesondere bei undeutlicher Aussprache oder schlechter Sprachverbindung zu einer Falscherkennung der digitalen Kennung führt. In diesem Fall wird der Operator in der Zentrale Z falsch über seinen jeweiligen Kommunikationspartner informiert, was mitunter zu gefährlichen Situationen, oder gar Unfällen führen kann. Der Operator kann durch eine bessere situative Wahrnehmung Fehler und Unstimmigkeiten vermeiden .

Aufgabe der Erfindung ist es somit, diesen Problemen abzuhelfen und ein Verfahren sowie ein System zur Identifikation und Prüfung von Sprechfunkmeldungen, sowie zur Zuordnung von Sprechfunkmeldungen von Fahrzeugen bereitzustellen, bei der die Wahrscheinlichkeit einer Falschzuordnung von Sprechfunkmeldungen an Fahrzeugen deutlich reduziert ist, und um die situative Wahrnehmung des jeweiligen Operators zu verbessern.

Die Erfindung löst diese Aufgabe bei einem Verfahren der eingangs genannten Art mit dem kennzeichnenden Merkmal des Patentanspruchs 1.
Erfindungsgemäß ist bei einem Verfahren zur Identifikation und Prüfung von Sprechfunkmeldungen sowie zur Zuordnung von Sprechfunkmeldungen zu Fahrzeugen, wobei jeweils ein im Fahrzeug befindlicher Sprecher im Zuge des Sprechfunkverkehrs an einer vorgegebenen Stelle, insbesondere am Beginn, jeder Sprechfunkmeldung jeweils die Kennung seines Fahrzeugs angibt, vorgesehen, dass
a) eine Anzahl von abgegebenen Sprechfunkmeldungen aufgezeichnet wird,
   - wobei jeweils die in der Sprechfunkmeldung enthaltene gesprochene Kennung (K) des jeweiligen Fahrzeugs mittels Spracherkennung in eine digitale Kennung transformiert wird, und diese digitale Kennung der jeweiligen Sprechfunkmeldung zugewiesen wird,
   - wobei aus denjenigen Sprechfunkmeldungen, denen jeweils dieselbe digitale Kennung zugewiesen wurde, ein Biometrie-Datensatz extrahiert wird, der die Stimmbiometrie des jeweiligen Sprechers charakterisiert, und
   - wobei dieser Biometrie-Datensatz der jeweiligen digitalen Kennung zugewiesen und in einer Datenbank abgespeichert wird, und
b) danach eine weitere Sprechfunkmeldung aufgezeichnet wird,
   - wobei aus der weiteren Sprechfunkmeldung, ein weiterer Biometrie-Datensatz extrahiert wird, der die Stimmbiometrie des jeweiligen Sprechers der weiteren Sprechfunkmeldung charakterisiert,
   - wobei unter in der Datenbank abgespeicherten Biometrie-Datensätzen nach demjenigen Biometrie-Datensatz gesucht wird, der mit dem weiteren Biometrie-Datensatz am besten übereinstimmt und ermittelt wird, und die Sprechfunkmeldung (M₄) demjenigen Fahrzeug mit der diesem Biometrie-Datensatz zugeordneten Kennung zugeordnet wird.

Um dem Operator einen besseren Eindruck von der Zuverlässigkeit der Identifikation und Prüfung der Sprechfunkmeldung sowie der Zuordnung der Sprechfunkmeldung zu einem Fahrzeug zu ermöglichen, ist vorgesehen, dass der Biometrie-Datensatz mit dem weiteren Biometrie-Datensatz verglichen wird und die Wahrscheinlichkeit ermittelt wird, mit der der Biometrie-Datensatz und der weitere Biometrie-Datensatz vom selben Sprecher herrühren.
Um eine weitere Verbesserung und Bestätigung der Zuordnung zu erhalten kann vorgesehen sein, dass jeweils eine in der weiteren Sprechfunkmeldung enthaltene gesprochene weitere Kennung des jeweiligen Fahrzeugs mittels Spracherkennung in eine weitere digitale Kennung transformiert wird, und diese weitere digitale Kennung der jeweiligen weiteren Sprechfunkmeldung zugewiesen wird,
- wobei bei Übereinstimmung des Biometrie-Datensatzes (B₁) mit dem weiteren Biometrie-Datensatz (B₄) die Identifikation der Zuordnung der Sprechfunkmeldung zur jeweiligen digitalen Kennung (K_{d4}; K_{d1}) bestätigt wird. Hierdurch wird die Genauigkeit der Detektion verbessert, wobei einerseits die Wahrscheinlichkeit von Falschpositiven verringert wird und andererseits die Erkennungsrate insgesamt verbessert wird.

Um während des laufenden Betriebs der Anlage die Zuordnung weiter zu verbessern, ist vorgesehen, dass bei Detektion einer Sprechfunkmeldungen mit einer digitalen Kennung, für die bereits ein Biometrie-Datensatz ermittelt worden ist, der der Kennung der Sprechfunkmeldung zugeordnete Biometrie-Datensatz an die neu hinzugekommene Sprechfunkmeldung angepasst wird. Die Anzahl der der Kennung zugeordneten ermittelten Sprechfunkmeldungen und/oder die Gesamtdauer der Sprechfunkmeldungen wird dem Biometrie-Datensatz zugeordnet. Die Wahrscheinlichkeit der erkannten Übereinstimmung wird als umso größer angesehen, je größer die Anzahl und Sprechfunkmeldungen mit der digitalen Kennung ermittelt worden sind und/oder je größer die Gesamtdauer der dem jeweiligen Biometrie-Datensatz, zugeordneten Sprechfunkmeldungen mit der digitalen Kennung ist.
Um bei Diskrepanzen der aus dem Stand der Technik verwendeten Spracherkennung und der erfindungsgemäß vorgeschlagenen Spracherkennung eine vorteilhafte Lösung zu bieten, können alternativ oder gleichzeitig unterschiedliche Vorgehensweisen vorgenommen werden. Es ist vorgesehen, dass die bei der Bestimmung der digitalen Kennung aus einer Sprechfunkmeldung mittels Spracherkennung die Wahrscheinlichkeit für die Korrektheit der jeweils ermittelten Kennung durch Spracherkennung vorgenommen wird.

Es ist ebenfalls vorgesehen, dass überprüft wird, ob sich die durch Spracherkennung ermittelte Kennung und die mittels Vergleichs der Biometrie-Datensätze ermittelte Kennung voneinander unterscheiden und im Falle eines Unterschiedes die ermittelte Wahrscheinlichkeit mit der der Biometrie-Datensatz und der weitere Biometrie-Datensatz vom selben Sprecher herrühren und die Wahrscheinlichkeit der Korrektheit der Spracherkennung miteinander verglichen werden.

Schließlich ist zusätzhch vorgesehen, dass dem Fahrzeug diejenige Kennung zugeordnet wird, für die die größere Wahrscheinlichkeit spricht.

Um neue Fahrzeuge im laufenden Betrieb mit der Kommunikationszentrale verwalten zu können, kann vorgesehen sein, dass für Sprechfunkmeldungen, jeweils die in der Sprechfunkmeldung enthaltene gesprochene Kennung des jeweiligen Fahrzeugs mittels Spracherkennung in eine digitale Kennung transformiert wird, und diese digitale Kennung der jeweiligen Sprechfunkmeldung zugewiesen wird, wobei aus denjenigen Sprechfunkmeldungen, denen jeweils dieselbe digitale Kennung zugewiesen wurde, ein Biometrie-Datensatz extrahiert wird, der die Stimmbiometrie des jeweiligen Sprechers charakterisiert, und wobei dieser Biometrie-Datensatz der jeweiligen digitalen Kennung zugewiesen und in einer Datenbank abgespeichert wird..

Die Erfindung löst diese Aufgabe bei einem Sprechfunksystem eingangs genannter Art mit dem kennzeichnenden Merkmal des Patentanspruchs 3. Die Erfindung betrifft ein Sprechfunksystem zur Identifikation und Prüfung von Sprechfunkmeldungen sowie zur Zuordnung von Sprechfunkmeldungen zu Fahrzeugen vorgesehen. Das Sprechfunksystem umfasst eine Zentrale, die mit einer Anzahl von Fahrzeugen in Sprechfunkkommunikation steht oder bringbar ist, wobei jeweils ein im Fahrzeug befindlicher Sprecher im Zuge des Sprechfunkverkehrs an einer vorgegebenen Stelle, insbesondere am Beginn, jeder Sprechfunkmeldung jeweils die Kennung seines Fahrzeugs angibt.
Erfindungsgemäß ist vorgesehen, dass
a) die Zentrale eine Spracherkennungseinheit aufweist, die einlangende Sprechfunkmeldungen aufzeichnet, und die in der Sprechfunkmeldung enthaltene gesprochene Kennung des jeweiligen Fahrzeugs mittels Spracherkennung in eine digitale Kennung transformiert,
   - die Zentrale eine Biometrie-Einheit aufweist, die aus denjenigen Sprechfunkmeldungen, denen jeweils dieselbe digitale Kennung zugewiesen wurde, einen Biometrie-Datensatz, der die Stimmbiometrie des jeweiligen Sprechers charakterisiert, extrahiert und an ihrem Ausgang abgibt, und
   - die Zentrale eine Zuordnungseinheit aufweist, der die von der Spracherkennungseinheit erstellte digitale Kennung und der von der Biometrie-Einheit erstellte Biometrie-Datensatz zugeführt sind und die erstellte digitale Kennung dem erstellten Biometrie-Datensatz zuordnet,
   - die Zentrale eine der Zuordnungseinheit nachgeschaltete Datenbank aufweist, die einen Biometrie-Datensatz sowie die diesem zugeordnete digitalen Kennung in einer Datenbank gemeinsam abspeichert und den Biometrie-Datensatz bei Angabe der jeweiligen digitalen Kennung zum Abruf zur Verfügung hält, und
b) wobei die Biometrie-Einheit aus der weiteren Sprechfunkmeldung, einen weiterer Biometrie-Datensatz extrahiert, der die Stimmbiometrie des jeweiligen Sprechers der weiteren Sprechfunkmeldung charakterisiert, an ihrem Ausgang zur Verfügung hält,
   - wobei die Datenbank der Biometrie-Einheit nachgeschaltet ist und bei Anliegen des weiteren Biometrie-Datensätzes am Eingang der Datenbank nach demjenigen Biometrie-Datensatz sucht, der mit dem weiteren Biometrie-Datensatz am besten übereinstimmt, die Datenbank diesen Biometrie-Datensatz gemeinsam mit der diesem Biometrie-Datensatz zugeordneten Kennung zur Verfügung hält..
Um dem Operator einen besseren Eindruck von der Zuverlässigkeit der Identifikation und Prüfung der Sprechfunkmeldung sowie der Zuordnung der Sprechfunkmeldung zu einem Fahrzeug zu ermöglichen, kann vorgesehen sein, dass eine Biometrie-Vergleichseinheit, der der von der Biometrie-Einheit erstellte Biometrie-Datensatz sowie der von der Datenbank ermittelte weitere Biometrie-Datensatz zugeführt sind,
- wobei die Biometrie-Vergleichseinheit den Biometrie-Datensatz und den weiteren Biometrie-Datensatz miteinander vergleicht und Unterschiede der beiden Biometrie-Datensätze bewertet und
- wobei die Biometrie-Vergleichseinheit die Wahrscheinlichkeit, mit der Biometrie-Datensatz und der weitere Biometrie-Datensatz vom selben Sprecher herrühren, ermittelt und zur Verfügung hält.

Um eine weitere Verbesserung und Bestätigung der Zuordnung zu erhalten kann vorgesehen sein, dass die Zuordnungseinheit bei Vorliegen eines Biometrie-Datensatzes sowie einer digitalen Kennung, für die bereits ein Biometrie-Datensatz in der Datenbank abgespeichert ist, den an der Datenbank abgespeicherten und der digitalen Kennung zugeordneten Datensatz an die neu hinzugekommene Sprechfunkmeldung sowie deren Biometrie-Datensatz anpasst.
Um während des laufenden Betriebs der Anlage die Zuordnung weiter zu verbessern, ist vorgesehen, dass die Zuordnungseinheit die Anzahl der der Kennung zugeordneten ermittelten Sprechfunkmeldungen und/oder die Gesamtdauer der Sprechfunkmeldungen ermittelt und dem in der Datenbank abgespeicherten Biometrie-Datensatz zuordnet, und
- dass die Datenbank (D) die dem Biometrie-Datensatz zugeordnete Anzahl und/oder Gesamtdauer an die Vergleichseinheit übermittelt, und
- dass die Vergleichseinheit die Wahrscheinlichkeit der erkannten Übereinstimmung, insbesondere mittels statistischer Methoden, umso größer bemisst, je größer die Anzahl und/oder je größer die Gesamtdauer der dem jeweiligen Biometrie-Datensatz zugeordneten Sprechfunkmeldungen mit der digitalen Kennung ist.
Um bei Diskrepanzen der aus dem Stand der Technik verwendeten Spracherkennung und der erfindungsgemäß vorgeschlagenen Spracherkennung eine vorteilhafte Lösung zu bieten, ist vorgesehen, dass die Spracherkennungseinheit bei Einlangen einer Sprechfunkmeldung gemeinsam mit der digitalen Kennung eine Wahrscheinlichkeit für die Korrektheit der jeweils ermittelten Kennung angibt, und ist zudem eine Wahrscheinlichkeitsvergleichseinheit vorgesehen, der die von der Spracherkennungseinheit ermittelte Wahrscheinlichkeit für die Korrektheit der jeweils ermittelten digitale Kennung sowie die von der Biometrie-Vergleichseinheit ermittelte Wahrscheinlichkeit zugeführt sind, wobei der Vergleichseinheit ermittelt, welche der beiden ihr zugeführten Wahrscheinlichkeiten größer ist und ein diesbezügliches Signal an ihrem Ausgang abgibt, und ist zudem eine Auswahleinheit vorgesehen, der das von der Wahrscheinlichkeitsvergleichseinheit erstellte Signal, die von der Spracherkennungseinheit ermittelte digitale Kennung sowie die von der Datenbank ermittelte digitale Kennung zugeführt sind, und die aufgrund des bei ihr einlangenden Signals jeweils diejenige digitale Kennung auswählt und an ihrem Ausgang zur Verfügung hält, der die jeweils größere Wahrscheinlichkeiten zugeordnet ist.

Vorteilhafterweise ist ein Programm zur Durchführung eines erfindungsgemäßen Verfahrens auf einem Datenträger abgespeichert und wird auf einem der Computer ausgeführt.

Mehrere vorteilhafte Ausführungsbeispiele der Erfindung werden anhand der **Fig. 4 bis 7** dargestellt.

**Fig. 4** zeigt das Vorgehen bei der Weiterverarbeitung einer Sprechfunkmeldung. **Fig. 5** zeigt die in der Datenbank abgespeicherte Datenstruktur. **Fig. 6** zeigt die Bestimmung der Wahrscheinlichkeit der Detektion eines Biometrie-Datensatzes aufgrund einer einlangenden Sprechfunkmeldung. **Fig. 7** zeigt eine Kombination der in den **Fig. 3 und 6** dargestellten Arten der Bestimmung einer digitalen Kennung mit verbesserter Genauigkeit.

Bei der in **Fig. 4** dargestellte Ausführungsform der Erfindung wird eine Sprechfunkmeldung M₁, M₂ eingelesen und einer Spracherkennungseinheit 0 sowie einer Biometrieeinheit 1 zugeführt. Die Spracherkennungseinheit 0 liefert aufgrund von ihr durchgeführten Spracherkennung eine digitale Kennung K_{d} des jeweiligen Fahrzeugs F₁,...F₃. Die Biometrieeinheit 1 liefert einen Bioemtrie-Datensatz B, der die für die Stimmbiometrie des Sprechers der Sprechfunkmeldung M wesentliche biometrische Informationen enthält. Diese Zuordnung wird dem jeweiligen Operator in der Leitzentrale zur Bestätigung vorgelegt.

Der Operator erhält somit den Biometrie-Datensatz B sowie die digitale Kennung K_{d}. Weiters wird die Sprechfunkmeldung an eine Zuordnungseinheit 5 zugeführt. Sofern der Operator die Zuordnung bestätigt, werden die digitale Kennung K_{d} sowie der Biometrie-Datensatz B₁,...B₃ einander von der Zuordnungseinheit 5 zugeordnet und in der Datenbank D abgespeichert.

Ein mögliches Ausführungsbeispiel eines Aufbaus einer solchen Datenbank D ist in **Fig. 5** dargestellt. Hierbei sind jeweils im Einzelnen Datensätze d₁,...d₃ jeweils eine digitale Erkennung K_{d}, ein Biometrie-Datensatz B_{d}, eine Gesamtsprechzeit t_{d} sowie ein Kennungszähler n_{d} zusammengefasst.

Die Fahrzeuge F₁ und F₂ übermitteln, wie in **Fig. 1** dargestellt, jeweils Sprechfunkmeldungen M₁, M₂ an die Kommunikationszentrale Z. Wie in **Fig. 4** dargestellt, werden die beiden Meldungen M₁, M₂ der Spracherkennungseinheit 0 zugeführt, die den jeweils erkannten Text der Kennung K der Meldungen M₁, M₂ in eine digitale Kennung K_{d1}, K_{d2} umwandelt und an ihrem Eingang zur Verfügung hält. Weiters werden die Kennungen jeweils an eine Einheit 1 zur Bestimmung eines Biometrie-Datensatzes geleitet, die an ihrem Ausgang jeweils einen Biometrie-Datensatz B₁, B₂ zur Verfügung stellt. Der Operator in der Zentrale erhält jeweils die Aufforderung, die Zugehörigkeit des Sprechers zum jeweiligen Fahrzeug F mit der erkannten digitalen Kennung K_{d} zu bestätigen. Hierfür wird in einer besonderen Ausführungsform der Erfindung jeweils die Kennung angezeigt und der Operator muss diese Kennung bestätigen. Bestätigt der Operator die Kennung K_{d}, so wird ein Datensatz d₁,...d₃ von der Zuordnungseinheit 5 erstellt. Der Datensatz d₁,...d₃ umfasst die digitale Kennung K_{d} sowie den Biometrie-Datensatz B_{d} und wird in der Datenbank D abgespeichert. Zusätzlich wird dem Datensatz d₁,...d₃ auch die Länge t_{d} der jeweiligen Sprechfunkmeldung M₁, M₂ sowie die Anzahl t_{d}. der bislang mit der jeweiligen Kennung K_{d} versehene Sprechfunkmeldungen M₁, M₂ in der Datenbank D abgespeichert.

Sofern eine weitere Sprechfunkmeldung M₄ eingeht, die von einem Fahrzeug F₁ abgesendet wurde, von dem bereits ein abgespeicherter Biometrie-Datensatz B₁ in der Datenbank D vorliegt, so wird der Biometrie-Datensatz B₁ an die neu hinzugekommene Sprechfunkmeldung M₄ angepasst. Die jeweiligen Einträge in die Datenbank D, insbesondere der zur Kennung K_{d} zugehörige Datensatz B₁ sowie die Gesamtdauer t_{d} der Sprechfunkmeldungen M₁, M₄ und die Anzahl n_{d} der ermittelten Sprechfunkmeldungen M₁, M₄ werden entsprechend angepasst und erhöht, insbesondere um die Dauer der nunmehr eingelangten Sprechfunkmeldung M₄ bzw. um den Wert 1.

In **Fig. 6** ist das Vorgehen bei Einlangen einer Sprechfunkmeldung M₄ dargestellt. Die Sprachfunkmeldung M₄ wird einer Biometrieeinheit 1 zugeführt, die aus der weiteren Sprechfunkmeldung M₄ einen weiteren Biometrie-Datensatz B₄ nach denselben Vorgaben extrahiert. Der Biometrie-Datensatz B₄ liegt am Ausgang der Biometrieeinheit 1 an und charakterisiert die Stimmbiometrie des jeweiligen Sprechers der weiteren Sprechfunkmeldung M₄. Anschließend wird eine Datenbankabfrage Q(B₄) an die Datenbank D erstellt, mit der nach demjenigen Biometrie-Datensatz B₁ gesucht wird, der mit dem weiteren Biometrie-Datensatz B₄ an besten übereinstimmt. Die Datenbank D übermittelt aufgrund der Abfrage Q (B₄) den Biometrie-Datensatz B₁ der Sprechfunkmeldung M₁. Am Ausgang der Datenbank liegen der Biometrie-Datensatz B₁, sowie die zugehörige Kennung K_{d1}.

Der weitere Biometrie-Datensatz B₄ sowie der Biometrie-Datensatz B₁ werden einer Biometrie-Vergleichseinheit 2 zugeführt, die die Unterschiede zwischen dem Biometrie-Datensatz B₁ und dem weiteren Biometrie-Datensatz B₄ ermittelt und quantifiziert. Aufgrund dieses Ergebnisses ermittelt die Biometrie-Vergleichseinheit 2 einen Wahrscheinlichkeitswert, mit dem die Wahrscheinlichkeit angegeben wird, mit der Biometrie-Datensatz B₁ und der weitere Datensatz B₄ vom selben Sprecher herrühren. Ein solcher Vergleich ist beispielsweise in dem US-Patent Nr. US6411933 sowie auf http://www.research.ibm.com/hlt/html/body_patents.html offenbart und ist einem Fachmann allgemein bekannt. Weitere ähnliche Verfahren sind beispielsweise in den folgenden Veröffentlichungen offenbart:
- Jain, A.K. ; Dept. of Comput. Sci. & Eng., Michigan State Univ., USA ; Ross, A. ; Prabhakar, S., "An introduction to biometric recognition", in Circuits and Systems for Video Technology, IEEE Transactions on (Volume:14 , Issue: 1), Seiten 4-20,
- Biometrics: Personal Identification in Networked Society, herausgegeben von Anil K. Jain,Ruud Bolle, Sharath Pankanti, Kluwer Academic Press, ISBN 0-7923-8345-1

Mit einem solchen in **Fig. 6** dargestellten System ist es einem Operator nur mehr möglich, auf einfache Weise zu erkennen, mit welcher Wahrscheinlichkeit P_{B} die erkannte digitale Kennung K_{d} tatsächlich vom Sprecher desjenigen Fahrzeugs F herrührt, dem diese Kennung K_{d} zugeordnet ist, sollte der Sprecher seine Kennung K falsch wiedergeben, so hat dies aufgrund der Bestimmung der digitalen Kennung K_{d} anhand der Stimmbiometrie des Sprechers keinen Einfluss auf die erzielte Kennung K_{d}. Trotz falscher Angabe der Kennung k wird die korrekte digitale Kennung K_{d} ermittelt.

Eine besondere Weiterbildung der Erfindung, die in **Fig. 7** dargestellt ist, vereinigt die Vorteile des aus dem Stand der Technik bekannten Verfahrens mit dem erfindungsgemäßen Vorteil. Wie aus dem Stand der Technik bekannte Anordnung der **Fig. 3** verfügt auch die in **Fig. 7** dargestellte Anordnung über eine Spracherkennungseinheit 0 sowie über eine Einheit 1 zur Bestimmung eines Biometrie-Datensatzes B.

Im Folgenden werden zwei unterschiedliche Fallkonstellationen gemeinsam dargestellt, nämlich einerseits der Fall, bei dem ein Sprecher des Fahrzeugs F₁ mit der Kennung K₁ die korrekte Kennung K₁ am Beginn seiner Sprechfunkmeldung M₄ angibt, andererseits der Fall, bei dem der Sprecher eine falsche Kennung K₂ am Beginn seiner Sprechfunkmeldung M₄ angibt.

Die am Eingang des Systems einlangende Sprechfunkmeldung M₄ wird sowohl der Spracherkennungseinheit 0 als auch der Einheit 1 zur Ermittlung des Biometrie-Datensatzes B zugeführt. Am Ausgang der Spracherkennungseinheit 0 liegt eine digitale Kennung K_{d2} an, die der vom Sprecher angegebenen Kennung entspricht. Für den Fall, dass der Sprecher die Kennung korrekt genannt hat, detektiert die Spracherkennungseinheit die tatsächlichen Kennung K₁ des Fahrzeugs F₁, andernfalls wird die falsche Kennung K₂ des Fahrzeugs F₂ erkannt.. Darüber hinaus gibt die Spracherkennungseinheit 0 auch einen Wahrscheinlichkeitswert P_{S} ab, der angibt, wie wahrscheinlich es ist, dass der jeweilige Sprecher tatsächlich eine Sprechfunkmeldung M abgegeben hat, die die jeweilige digitale Kennung K_{d3} in gesprochener Form enthält. Je nach Beschaffenheit des Sprechfunkkanals sowie je nach Deutlichkeit der Aussprache des Sprechers werden für diesen Wert unterschiedliche Wahrscheinlichkeitswerte P_{S} ermittelt. Die Möglichkeit, eine absichtliche oder eine unabsichtliche sichtliche Falschaussprache der jeweiligen Kennung K_{d} durch den Sprecher zu erkennen, ist jedoch bei alleiniger Verwendung der Spracherkennungseinheit 0 zur Bestimmung der Kennung nicht gegeben. Bei klarer und deutlicher Aussprache und guten Übertragungsverhältnissen liegt am Ausgang der Spracherkennungseinheit 0 ein hoher Wahrscheinlichkeitswert P_{S} an. Mit der in **Fig. 3** dargestellten Ausführungsform würde bei nicht korrekter Angabe der Kennung des Fahrzeugs aufgrund des hohen Wahrscheinlichkeitswerts von P_{S} jedenfalls das Fahrzeug F₂ anstelle des Fahrzeugs F₁ auf dem Bildschirm des Operators markiert werden, im Falle der korrekten Angabe der Kennung des Fahrzeugs würde die korrekte Kennung - ebenfalls mit einem hohen Wahrscheinlichkeitswert P_{S} - erkannt werden, ohne dass eine weitere Überprüfung möglich wäre.

Die in **Fig. 7** dargestellte Ausführungsform der Erfindung verfügt darüber hinaus wie auch das in **Fig. 6** dargestellte System noch über eine Einheit 1 zur Ermittlung eines Biometrie-Datensatzes. Am Ausgang der Einheit 1 zur Ermittlung des Biometrie-Datensatzes liegt der weitere Biometrie-Datensatz B₄ an. An die Datenbank D wird, wie auch in **Fig. 4****,** eine Datenbankabfrage Q (B₄) übermittelt, mit der nach demjenigen Biometrie-Datensatz B₄ gesucht wird, der mit dem weiteren Biometrie-Datensatz B₄ am besten übereinstimmt. Die Datenbank D liefert an ihrem Ausgang einerseits den aufgrund identischen Speichers am besten übereinstimmenden Biometrie-Datensatz B₁ und andererseits die dem Biometrie-Datensatz B₁ zugeordnete digitale Kennung K_{d1} des ersten Fahrzeug F₁. Der Biometrie-Datensatz B₁ sowie der weitere Biometrie-Datensatz B₄ sind der Biometrie-Vergleichseinheit 2 zugeführt. Diese ermittelt Unterschiede zwischen dem Biometrie-Datensatz B₁ und dem weiteren Biometrie-Datensatz B₄ und folglich eine Wahrscheinlichkeit P_{B}, mit der Biometrie-Datensatz B₁ und der weitere Biometrie-Datensatz B₄ vom selben Sprecher herrühren.

Sofern der jeweilige Sprecher die jeweilige Kennung K_{d} richtig angegeben hat, ist aufgrund der Zuordnung zwischen der richtig angegebenen digitalen Kennung K_{d1} und dem Biometrie-Datensatz B₁ eine Zuordnung geschaffen, die von der konkreten, hier falschen Nennung der Kennung durch den Sprecher unabhängig ist. Es wird somit ein Wahrscheinlichkeitswert P_{B} ermittelt, der angibt, ob der Sprecher, der eine digitale Kennung K_{d1} abgegeben hat, die einem Fahrzeug F₁ zugeordnet war, weiterhin im selben Fahrzeug ist. Die beiden Wahrscheinlichkeitswerte, nämlich die Wahrscheinlichkeit P_{S} der Korrektheit der Spracherkennung und der Wahrscheinlichkeitswert P_{B}, mit der der Biometrie-Datensatz B₁ und der weitere Biometrie-Datensatz B₄ vom selben Sprecher herrühren, werden miteinander verglichen.

Der Vergleichseinheit 2, die zur Bestimmung der Übereinstimmung des Biometrie-Datensatzes B₁ und des weiteren Biometrie-Datensatzes B₄ dient, sind in dieser besonderen Ausführungsform der Erfindung darüber hinaus auch noch die Gesamtzeit t_{d} sowie die Gesamtanzahl n_{d} der Sprechfunkmeldungen zugeführt. Die Wahrscheinlichkeit P_{B} wird umso größer, je größer die Anzahl n_{d} der Sprechfunkmeldungen M ist und je größer die Gesamtdauer t_{d} der einem jeweiligen Biometrie-Datensatz B zugeordneten Sprechfunkmeldungen M ist.

Kommen die beiden Erkennungsverfahren zum selben Ergebnis, kann die jeweilige digitale Kennung K_{d1} verifiziert werden. Darüber hinaus kann angegeben werden, dass die erkannte digitale Kennung K_{d1} mit sehr großer Wahrscheinlichkeit korrekt ist, da beide Erkennungsverfahren zum selben Ergebnis gekommen sind. Diese Wahrscheinlichkeit kann der erkannten digitalen Kennung zugeordnet werden. Bei der weiteren Verarbeitung kann Datensätzen, die aufgrund der jeweiligen Kennung erstellt wurden, dieser Umstand oder diese Wahrscheinlichkeit zugeordnet werden. Es ist auch möglich, dass bei der Darstellung der jeweiligen Kennung die Wahrscheinlichkeit und/oder dieser Umstand, gegebenenfalls symbolhaft, dargestellt werden.

Wird durch die beiden Erkennungsverfahren jeweils eine unterschiedliche digitale Kennung K_{d1}, K_{d2} ermittelt, so wird letztlich diejenige der beiden Kennungen K_{d1}, K_{d2} als die korrekt angesehen, für die jeweils die größere Wahrscheinlichkeit P_{S}, P_{B} spricht. Die beiden Wahrscheinlichkeiten P_{S}, P_{B} sind einer Wahrscheinlichkeitsvergleichseinheit 3 zugeführt, die die beiden Wahrscheinlichkeiten P_{S}, P_{B} miteinander vergleicht und ein Signal Sel an ihrem Ausgang angibt, welche der beiden Wahrscheinlichkeiten größer ist. Weiters ist eine Auswahleinheit 4 vorgesehen, der das von der Wahrscheinlichkeitsvergleichseinheit 3 abgegebene Signal Sel zugeführt ist. Der Auswahleinheit 4 sind die von der Spracherkennungseinheit 0 ermittelte Kennung K_{d2} sowie die von der Datenbank D abgegebene Kennung K_{d1} zugeführt. Die Auswahleinheit 4 wählt diejenige der ermittelten Kennungen K_{d1}, K_{d2} aus, deren jeweilige zugeordnete Wahrscheinlichkeit P_{S}, P_{B} größer ist. Aufgrund der größeren Wahrscheinlichkeit P_{B} wird im vorliegenden Fall trotz falscher Angabe der Kennung K_{d2} durch den Sprecher im Fahrzeug F₁ die korrekte Kennung K_{d1} des Fahrzeugs F₁ ermittelt. Am Ausgang der Auswahleinheit 4 liegt die digitale Kennung K_{d1} des Fahrzeugs F₁ an.

## Patentansprüche

1. Verfahren zur Identifikation und Prüfung von Sprechfunkmeldungen (M₁...M₃) sowie zur Zuordnung von Sprechfunkmeldungen (M₁...M₃) zu Fahrzeugen (F₁...F₃), wobei jeweils ein im Fahrzeug (F₁...F₃) befindlicher Sprecher im Zuge des Sprechfunkverkehrs an einer vorgegebenen Stelle, insbesondere am Beginn, jeder Sprechfunkmeldung (M₁...M₃) jeweils die Kennung (K) seines Fahrzeugs angibt, wobei
a) eine Anzahl von abgegebenen Sprechfunkmeldungen (M₁...M₃) aufgezeichnet wird,
b) jeweils die in der Sprechfunkmeldung (M₁...M₃) enthaltene gesprochene Kennung (K) des jeweiligen Fahrzeugs (F₁...F₃) mittels Spracherkennung (0) in eine digitale Kennung (K_{d}) transformiert wird, und diese digitale Kennung (K_{d}) der jeweiligen Sprechfunkmeldung (M₁...M₃) zugewiesen wird,
c) aus denjenigen Sprechfunkmeldungen (M₁...M₃), denen jeweils dieselbe digitale Kennung zugewiesen wurde, ein Biometrie-Datensatz (B₁...B₃) extrahiert wird, der die Stimmbiometrie des jeweiligen Sprechers charakterisiert,
d) dieser Biometrie-Datensatz (B₁...B₃) der jeweiligen digitalen Kennung (K_{d}) zugewiesen und in einer Datenbank abgespeichert wird,
e) danach eine weitere Sprechfunkmeldung (M₄) aufgezeichnet wird,
f) aus der weiteren Sprechfunkmeldung (M₄), ein weiterer Biometrie-Datensatz (B₄) extrahiert wird, der die Stimmbiometrie des jeweiligen Sprechers der weiteren Sprechfunkmeldung (M₄) charakterisiert,
g) unter in der Datenbank (D) abgespeicherten Biometrie-Datensätzen (B₁...B₃) nach demjenigen Biometrie-Datensatz (B₁) gesucht wird, der mit dem weiteren Biometrie-Datensatz (B₄) am besten übereinstimmt, und die Sprechfunkmeldung (M₄) demjenigen Fahrzeug (F₁) mit der diesem Biometrie-Datensatz (B₁) zugeordneten Kennung (K_{d}) zugeordnet wird,
**dadurch gekennzeichnet, dass**
h) bei der Bestimmung der digitalen Kennung (K_{d}) aus einer Sprechfunkmeldung mittels Spracherkennung (0) die Wahrscheinlichkeit (Ps) für die Korrektheit der jeweils ermittelten Kennung (K_{d}) ermittelt wird,
i) überprüft wird, ob sich die durch Spracherkennung (0) ermittelte Kennung und die mittels Vergleichs (2) der Biometrie-Datensätze (B) ermittelte Kennung voneinander unterscheiden und
im Falle eines Unterschiedes zwischen den Kennungen die ermittelte Wahrscheinlichkeit (P_{B}), mit der Biometrie-Datensatz (B₁) und der weitere Biometrie-Datensatz (B₄) vom selben Sprecher herrühren und die Wahrscheinlichkeit (P_{S}) der Korrektheit der Spracherkennung (0) miteinander verglichen werden, und dem Fahrzeug (F₁) diejenige Kennung zugeordnet wird, für die die größere Wahrscheinlichkeit (P_{S}; P_{B}) spricht, und
j) bei Detektion einer Sprechfunkmeldung mit einer digitalen Kennung (K_{d}), für die bereits ein Biometrie-Datensatz (B₁) ermittelt worden ist, der der Kennung (K_{d}) der Sprechfunkmeldung (M₄) zugeordnete Biometrie-Datensatz (B₁) an die neu hinzugekommene Sprechfunkmeldung (M₄) angepasst wird,
wobei die Anzahl der der Kennung (K_{d}) zugeordneten ermittelten Sprechfunkmeldungen (M₁, M₄) und/oder die Gesamtdauer der Sprechfunkmeldungen dem Biometrie-Datensatz (B₁) zugeordnet wird, und
k) die Wahrscheinlichkeit (P_{B}) der erkannten Übereinstimmung als umso größer angesehen wird, je größer die Anzahl an Sprechfunkmeldungen mit der korrekten digitalen Kennung (K_{d}) ist und/oder je größer die Gesamtdauer (td) der dem jeweiligen Biometrie-Datensatz (B₁) zugeordneten Sprechfunkmeldungen (M₁, M₂) mit der digitalen Kennung (K_{d}) ist.

2. Verfahren nach Anspruch 1, **dadurch gekennzeichnet, dass** jeweils eine in der weiteren Sprechfunkmeldung (M₄) enthaltene gesprochene weitere Kennung (K₄) des jeweiligen Fahrzeugs mittels Spracherkennung in eine weitere digitale Kennung (K_{d4}) transformiert wird, und diese weitere digitale Kennung (K_{d4}) der jeweiligen weiteren Sprechfunkmeldung (M₄) zugewiesen wird,
wobei bei Übereinstimmung des Biometrie-Datensatzes (B₁) mit dem weiteren Biometrie-Datensatz (B₄) die Identifikation der Zuordnung der Sprechfunkmeldung zur jeweiligen digitalen Kennung (K_{d4}; K_{d1}) bestätigt wird.

3. Sprechfunksystem zur Identifikation und Prüfung von Sprechfunkmeldungen (M₁...M₃) sowie zur Zuordnung von Sprechfunkmeldungen (M₁...M₃) zu Fahrzeugen (F₁...F₃), umfassend eine Zentrale (Z), die mit einer Anzahl von Fahrzeugen (F₁...F₃) in Sprechfunkkommunikation steht oder bringbar ist, wobei jeweils ein im Fahrzeug (F₁...F₃) befindlicher Sprecher im Zuge des Sprechfunkverkehrs an einer vorgegebenen Stelle, insbesondere am Beginn, jeder Sprechfunkmeldung (M₁...M₃) jeweils die Kennung (K) seines Fahrzeugs angibt, wobei
a) die Zentrale (Z) eine Spracherkennungseinheit (0) aufweist, die dazu ausgelegt ist, einlangende Sprechfunkmeldungen (M₁...M₃) aufzuzeichnen, und die in der Sprechfunkmeldung (M₁...M₃) enthaltene gesprochene Kennung (K) des jeweiligen Fahrzeugs (F₁...F₃) mittels Spracherkennung in eine digitale Kennung (K_{d}) zu transformieren,
b) die Zentrale (Z) eine Biometrie-Einheit (1) aufweist, die dazu ausgelegt ist, aus denjenigen Sprechfunkmeldungen (M₁...M₃), denen jeweils dieselbe digitale Kennung (K_{d}) zugewiesen wurde, einen Biometrie-Datensatz (B₁...B₃), der die Stimmbiometrie des jeweiligen Sprechers charakterisiert, zu extrahieren und an ihrem Ausgang abzugeben,
c) die Zentrale (Z) eine Zuordnungseinheit (5) aufweist, der die von der Spracherkennungseinheit (0) erstellte digitale Kennung (K_{d}) und der von der Biometrie-Einheit (1) erstellte Biometrie-Datensatz (B₁...B₃) zugeführt sind und die dazu ausgelegt ist, die erstellte digitale Kennung (K_{d}) dem erstellten Biometrie-Datensatz (B₁...B₃) zuzuordnen,
d) die Zentrale (Z) eine der Zuordnungseinheit (5) nachgeschaltete Datenbank (D) aufweist, die dazu ausgelegt ist, einen Biometrie-Datensatz (B₁...B₃) sowie die diesem zugeordnete digitale Kennung (K_{d}) in einer Datenbank gemeinsam abzuspeichern und den Biometrie-Datensatz (B₁...B₃) bei Angabe der jeweiligen digitalen Kennung (K_{d}) zum Abruf zur Verfügung zu halten, und
e) wobei die Biometrie-Einheit (1) dazu ausgelegt ist, aus einer weiteren Sprechfunkmeldung (M₄) einen weiteren Biometrie-Datensatz (B₄) zu extrahieren, der die Stimmbiometrie des jeweiligen Sprechers der weiteren Sprechfunkmeldung (M₄) charakterisiert, und diesen an ihrem Ausgang zur Verfügung zu halten,
f) wobei die Datenbank (D) der Biometrie-Einheit (1) nachgeschaltet ist und dazu ausgelegt ist, bei Anliegen des weiteren Biometrie-Datensätzes (B₄) am Eingang der Datenbank (D) nach demjenigen Biometrie-Datensatz (B₁) zu suchen, der mit dem weiteren Biometrie-Datensatz (B₄) am besten übereinstimmt, und diesen Biometrie-Datensatz (B₁) gemeinsam mit der diesem Biometrie-Datensatz (B₁) zugeordneten Kennung (K_{d}) zur Verfügung zu halten,
**dadurch gekennzeichnet, dass**
g) die Spracherkennungseinheit (0) dazu ausgelegt ist, bei Einlangen einer Sprechfunkmeldung (M₁, M₂) gemeinsam mit der digitalen Kennung (K_{d}) eine Wahrscheinlichkeit (P_{S}) für die Korrektheit der jeweils ermittelten Kennung (K_{d}) anzugeben,
h) eine Biometrie-Vergleichseinheit (2) vorgesehen ist, der der von der Biometrie-Einheit (1) erstellte Biometrie-Datensatz (B₁) sowie der von der Datenbank (D) ermittelte weitere Biometrie-Datensatz (B₄) zugeführt sind,
- wobei die Biometrie-Vergleichseinheit (2) dazu ausgelegt ist, den Biometrie-Datensatz (B₁) und den weiteren Biometrie-Datensatz (B₄) miteinander zu vergleichen und Unterschiede der beiden Biometrie-Datensätze (B₁, B₄) zu bewerten und
- wobei die Biometrie-Vergleichseinheit (2) dazu ausgelegt ist, die Wahrscheinlichkeit (P_{B}), mit der der Biometrie-Datensatz (B₁) und der weitere Biometrie-Datensatz (B₄) vom selben Sprecher herrühren, zu ermitteln und zur Verfügung zu halten,i) eine Wahrscheinlichkeitsvergleichseinheit (3) vorgesehen ist, der die von der Spracherkennungseinheit (0) ermittelte Wahrscheinlichkeit (P_{S}) für die Korrektheit der jeweils ermittelten digitalen Kennung (K_{d2}) sowie die von der Biometrie-Vergleichseinheit (2) ermittelte Wahrscheinlichkeit (P_{B}) zugeführt sind,
wobei die Wahrscheinlichkeitsvergleichseinheit (3) dazu ausgelegt ist, zu ermitteln, welche der beiden ihr zugeführten Wahrscheinlichkeiten (P_{B}, P_{S}) größer ist und ein diesbezügliches Signal (Sel) an ihrem Ausgang abzugeben,
j) eine Auswahleinheit (4) vorgesehen ist, der das von der Wahrscheinlichkeitsvergleichseinheit (3) erstellte Signal (Sel), die von der Spracherkennungseinheit (0) ermittelte digitale Kennung (K_{d2}) sowie die von der Datenbank (D) ermittelte digitale Kennung (K_{d1}) zugeführt sind, und die dazu ausgelegt ist, aufgrund des bei ihr einlangenden Signals (Sel) jeweils diejenige digitale Kennung (K_{d1}, K_{d2}) auszuwählen und an ihrem Ausgang zur Verfügung zu halten, der die jeweils größere Wahrscheinlichkeiten (P_{B}, P_{S}) zugeordnet ist,
k) die Zuordnungseinheit (5) dazu ausgelegt ist, die Anzahl (n₁) der der Kennung (K_{d}) zugeordneten ermittelten Sprechfunkmeldungen (M₁, M₄) und/oder die Gesamtdauer (t₁) der Sprechfunkmeldungen (M₁, M₄) zu ermitteln und dem in der Datenbank (D) abgespeicherten Biometrie-Datensatz (B₁) zuzuordnen,
I) die Datenbank (D) dazu ausgebildet ist, die dem Biometrie-Datensatz (B₁) zugeordnete Anzahl (n₁) und/oder Gesamtdauer (t₁) an die Biometrie-Vergleichseinheit (2) zu übermitteln, und
m) die Biometrie-Vergleichseinheit (2) dazu ausgelegt ist, die Wahrscheinlichkeit (P_{B}) der erkannten Übereinstimmung, insbesondere mittels statistischer Methoden, umso größer zu bemessen, je größer die Anzahl (n₁) und/oder je größer die Gesamtdauer (t_{d}) der dem jeweiligen Biometrie-Datensatz (B₁) zugeordneten Sprechfunkmeldungen (M₁, M₂) mit der digitalen Kennung (K_{d}) ist.

4. Sprechfunksystem nach Anspruch 3, **dadurch gekennzeichnet, dass** die Zuordnungseinheit (5) dazu ausgelegt ist, bei Vorliegen eines Biometrie-Datensatzes (B₄) sowie einer digitalen Kennung (K_{d}), für die bereits ein Biometrie-Datensatz (B₁) in der Datenbank (D) abgespeichert ist, den an der Datenbank abgespeicherten und der digitalen Kennung (K_{d}) zugeordneten Datensatz an die neu hinzugekommene Sprechfunkmeldung (M₄) sowie deren Biometrie-Datensatz (B₄) anzupassen.

5. Datenträger auf dem ein Programm zur Durchführung eines Verfahrens durch einen Computer mit einer Empfangseinrichtung für Sprechfunkmeldungen gemäß einem der Ansprüche 1 oder 2 abgespeichert ist.

## Claims

1. A method for identifying and checking radiotelephony messages (M₁...M₃) and associating radiotelephony messages (M₁...M₃) with vehicles (F₁...F₃), wherein during the radiotelephony communication a speaker located in each vehicle (F₁...F₃) states the identifier (K) of said driver's vehicle in each case at a predetermined point, in particular at the beginning, of each radiotelephony message (M₁...M₃), wherein
a) a number of delivered radiotelephony messages (M₁...M₃) are recorded,
b) in each case the spoken identifier (K) of the vehicle (F₁...F₃) which is contained in the radiotelephony message (M₁...M₃) is transformed into a digital identifier (K_{d}) by means of speech recognition (0), and said digital identifier (K_{d}) is assigned to the radiotelephony message (M₁...M₃),
c) a biometric dataset (B₁...B₃) characterising the voice biometrics of each speaker is extracted from the radiotelephony messages (M₁...M₃) to which the same digital identifier has been assigned,
d) said biometric dataset (B₁...B₃) is assigned to the digital identifier (K_{d}) and stored in a database,
e) a further radiotelephony message (M₄) is recorded thereafter,
f) a further biometric dataset (B₄) that characterises the voice biometrics of the speaker of the further radiotelephony message (M₄) is extracted from the further radiotelephony message (M₄),
g) the biometric dataset (B₁) that best matches the further biometric dataset (B₄) is searched for among biometric datasets (B₁...B₃) stored in the database (D), and the radiotelephony message (M₄) is associated with the vehicle (F₁) having the identifier (K_{d}) associated with said biometric dataset (B₁),
**characterised in that**
h) when determining the digital identifier (K_{d}) from a radiotelephony message by means of speech recognition (0), the probability (Ps) of the determined identifier (K_{d}) being correct is determined,
i) a check is carried out as to whether the identifier determined by speech recognition (0) and the identifier determined by comparing (2) the biometric datasets (B) differ from one another, and
if there is a difference between the identifiers, the determined probability (P_{B}) that the biometric dataset (B₁) and the further biometric dataset (B₄) originate from the same speaker and the probability (P_{S}) of the speech recognition (0) being correct are compared with one another, and the identifier supported by the greater probability (P_{S}; P_{B}) is associated with the vehicle (F₁), and
j) upon detection of a radiotelephony message that has a digital identifier (K_{d}) for which a biometric dataset (B₁) has already been determined, the biometric dataset (B₁) associated with the identifier (K_{d}) of the radiotelephony message (M₄) is adapted to the newly added radiotelephony message (M₄),
the number of determined radiotelephony messages (M₁, M₄) associated with the identifier (K_{d}) and/or the total duration of the radiotelephony messages is associated with the biometric dataset (B₁), and
k) the higher the number of radiotelephony messages is which have the correct digital identifier (K_{d}) and/or the longer the total duration (td) of the radiotelephony messages (M₁, M₂) associated with the biometric dataset (B₁) is which have the digital identifier (K_{d}), the greater the probability (P_{B}) of the detected match is considered.

2. The method according to claim 1, **characterised in that** in each case a further spoken identifier (K₄), contained in the further radiotelephony message (M₄), of the vehicle is transformed into a further digital identifier (K_{d4}) by means of speech recognition, and said further digital identifier (K_{d4}) is assigned to the further radiotelephony message (M₄),
wherein the identification of the association of the radiotelephony message with the digital identifier (K_{d4}; K_{d1}) is confirmed when the biometric dataset (B₁) matches the further biometric dataset (B₄).

3. A radiotelephony system for identifying and checking radiotelephony messages (M₁...M₃) and for associating radiotelephony messages (M₁...M₃) with vehicles (F₁...F₃), comprising a central unit (Z) that is in or can be brought into radiotelephony communication with a number of vehicles (F₁...F₃), wherein during the radiotelephony communication a speaker located in the vehicle (F₁...F₃) in each case states the identifier (K) of said speaker's vehicle at a predetermined point, in particular at the beginning, of each radiotelephony message (M₁...M₃), wherein
a) the central unit (Z) comprises a speech recognition unit (0) that is designed to record incoming radiotelephony messages (M₁...M₃) and to transform the spoken identifier (K), contained in the radiotelephony message (M₁...M₃), for the vehicle (F₁...F₃) into a digital identifier (K_{d}) by means of speech recognition,
b) the central unit (Z) comprises a biometrics unit (1) that is designed to extract a biometric dataset (B₁...B₃) characterising the voice biometrics of the speaker from the radiotelephony messages (M₁...M₃) to which the same digital identifier (K_{d}) has been assigned, and to present said biometric dataset at the output thereof,
c) the central unit (Z) comprises an association unit (5) that is supplied with the digital identifier (K_{d}) created by the speech recognition unit (0) and the biometric dataset (B₁...B₃) created by the biometrics unit (1) and is designed to associate the created digital identifier (K_{d}) with the created biometrics dataset (B₁...B₃),
d) the central unit (Z) comprises a database (D) that is connected downstream of the association unit (5) and is designed to store a biometric dataset (B₁...B₃) and the digital identifier (K_{d}) associated therewith together in a database and to make the biometric dataset (B₁...B₃) available for retrieval when the digital identifier (K_{d}) is stated, and
e) wherein the biometrics unit (1) is designed to extract a further biometric dataset (B₄) characterising the voice biometrics of the speaker of the further radiotelephony message (M₄) from a further radiotelephony message (M₄), and to make said biometric dataset available at its output,
f) wherein the database (D) is connected downstream of the biometrics unit (1) and is designed to search for the biometric dataset (B₁) that best matches the further biometric dataset (B₄) when the further biometric dataset (B₄) is pending at the input of the database (D), and to make said biometric dataset (B₁) available together with the identifier (K_{d}) associated with said biometric dataset (B₁),
**characterised in that**
g) when a radiotelephony message (M₁, M₂) is received together with the digital identifier (K_{d}), the speech recognition unit (0) is designed to state a probability (P_{S}) of the determined identifier (K_{d}) being correct,
h) a biometrics comparison unit (2) is provided, to which the biometric dataset (B₁) created by the biometrics unit (1) and the further biometric dataset (B₄) determined by the database (D) are supplied,
- wherein the biometrics comparison unit (2) is designed to compare the biometric dataset (B₁) and the further biometric dataset (B₄) with one another and to evaluate differences between the two biometric datasets (B₁, B₄), and
- wherein the biometrics comparison unit (2) is designed to determine the probability (P_{B}) that the biometric dataset (B₁) and the further biometric dataset (B₄) originate from the same speaker, and to make said probability available,
i) a probability comparison unit (3) is provided, which is supplied with the probability (P_{S}), determined by the speech recognition unit (0), of the determined digital identifier (K_{d2}) in each case being correct and with the probability (P_{B}) determined by the biometrics comparison unit (2),
wherein the probability comparison unit (3) is designed to determine which of the two probabilities (P_{B}, P_{S}) supplied thereto is greater and to deliver an associated signal (Sel) at its output,
j) a selection unit (4) is provided, which is supplied with the signal (Sel) created by the probability comparison unit (3), the digital identifier (K_{d2}) determined by the speech recognition unit (0) and the digital identifier (K_{d1}) determined by the database (D), and is designed to select, on the basis of the signal (Sel) received thereby, the digital identifier (K_{d1}, K_{d2}) with which the greater probabilities (P_{B}, P_{S}) are associated and to make said digital identifier available at the output thereof,
k) the association unit (5) is designed to determine the number (n₁) of determined radiotelephony messages (M₁, M₄) associated with the identifier (K_{d}) and/or the total duration (t₁) of the radiotelephony messages (M₁, M₄) and to associate same with the biometric dataset (B₁) stored in the database (D),
l) the database (D) is designed to transmit the biometrics comparison unit (2) the number (n₁) and/or total duration (t₁) associated with the biometric dataset (B₁), and
m) the biometrics comparison unit (2) is designed to increase the probability (P_{B}) of the detected match, in particular by means of statistical methods, the higher the number (n₁) and/or the longer the total duration (t_{d}) of the radiotelephony messages (M₁, M₂) is which have the digital identifier (K_{d}) and are associated with the biometric dataset (B₁).

4. The radiotelephony system according to claim 3, **characterised in that** the association unit (5) is designed, when there are a biometric dataset (B₄) and a digital identifier (K_{d}) for which there is already a biometric dataset (B₁) stored in the database (D), to adapt the dataset stored in the database and associated with the digital identifier (K_{d}) to the newly added radiotelephony message (M₄) and the biometric dataset (B₄) thereof.

5. A data carrier on which a program is stored for carrying out a method by a computer comprising a receiver device for radiotelephony messages according to any of claims 1 or 2.

## Revendications

1. Procédé d'identification et de vérification de messages de radiotéléphonie (M₁...M₃) ainsi que d'association des messages de radiotéléphonie (M₁...M₃) à des véhicules (F₁...F₃), dans lequel un locuteur respectif se trouvant dans le véhicule (F₁...F₃) indique respectivement l'identifiant (K) de son véhicule au cours du trafic de radiotéléphonie à un moment prédéfini, notamment au débit, de chaque message de radiotéléphonie (M₁...M₃), dans lequel
a) un certain nombre de messages de radiotéléphonie délivrés (M₁...M₃) sont enregistrés,
b) l'identifiant (K) annoncé contenu dans le message de radiotéléphonie (M₁...M₃) du véhicule respectif (F₁...F₃) est respectivement transformé en un identifiant numérique (K_{d}) au moyen de reconnaissance vocale (0) et cet identifiant numérique (K_{d}) est attribué au message de radiotéléphonie respectif (M₁...M₃),
c) un jeu de données de biométrie (B₁...B₃) est extrait des messages de radiotéléphonie (M₁...M₃), auxquels respectivement le même identifiant numérique a été attribué, ledit jeu caractérisant la biométrie de parole du locuteur respectif,
d) ce jeu de données de biométrie (B₁...B₃) est attribué à l'identifiant numérique respectif (K_{d}) et mémorisé dans une base de données,
e) ensuite, un autre message de radiotéléphonie (M₄) est enregistré,
f) un autre jeu de données de biométrie (B₄) est extrait de l'autre message de radiotéléphonie (M₄), qui caractérise la biométrie de parole du locuteur respectif de l'autre message de radiotéléphonie (M₄),
g) parmi les jeux de données de biométrie (B₁...B₃) mémorisés dans la base de données (D), une recherche est effectuée pour trouver le jeu de données de biométrie (B₁), qui correspond le mieux à l'autre jeu de données de biométrie (B₄) et le message de radiotéléphonie (M₄) est attribué au véhicule (F₁) avec l'identifiant (K_{d}) attribué à ce jeu de données de biométrie (B₁),
**caractérisé en ce que**
h) lors de la détermination de l'identifiant numérique (K_{d}) à partir d'un message de radiotéléphonie à l'aide de reconnaissance vocale (0), la probabilité (Ps) d'exactitude de l'identifiant déterminé (K_{d}) respectif est calculée,
i) il est vérifié si l'identifiant déterminé par le biais de la reconnaissance vocale (0) et l'identifiant calculé par comparaison (2) des jeux de données de biométrie (B) sont différents l'un de l'autre et
en cas de différence entre les identifiants, la probabilité calculée (P_{B}), que le jeu de données de biométrie (B₁) et l'autre jeu de données de biométrie (B₄) proviennent du même locuteur et la probabilité (P_{S}) d'exactitude de la reconnaissance vocale (0) sont comparées et l'identifiant pour lequel la plus grande probabilité (P_{S} ; P_{B}) convient est attribué au véhicule (F₁) et
j) lors de la détection d'un message de radiotéléphonie avec un identifiant numérique (K_{d}), pour lequel un jeu de données de biométrie (B₁) a déjà été calculé, le jeu de données de biométrie (B₁) attribué à l'identifiant (K_{d}) du message de radiotéléphonie (M₄) est adapté au message de radiotéléphonie (M₄) nouvellement arrivé,
dans lequel le nombre de messages de radiotéléphonie (M₁, M₄) calculés attribués à l'identifiant (K_{d}) et/ou la durée totale des messages de radiotéléphonie sont attribués au jeu de données de biométrie (B₁) et
k) la probabilité (P_{B}) de coïncidence reconnue est considérée comme d'autant plus forte que le nombre de messages de radiotéléphonie avec l'identifiant numérique (K_{d}) est correct est élevé et/ou que la durée totale (td) des messages de radiotéléphonie (M₁, M₂) attribués au jeu de données de biométrie respectif (B₁) avec l'identifiant numérique (K_{d}) est élevée.

2. Procédé selon la revendication 1, **caractérisé en ce que**, respectivement, un autre identifiant (K₄) annoncé contenu dans l'autre message de radiotéléphonie (M₄) du véhicule est transformé en un autre identifiant numérique (K_{d4}) au moyen de reconnaissance vocale et cet autre identifiant numérique (K_{d4}) est attribué à l'autre message de radiotéléphonie respectif (M₄),
dans lequel, en cas de coïncidence du jeu de données de biométrie (B₁) avec l'autre jeu de données de biométrie (B₄) l'identification de l'attribution du message de radiotéléphonie à l'identifiant numérique (K_{d4} ; K_{d1}) respectif est confirmée.

3. Système de radiotéléphonie pour l'identification et la vérification de messages de radiotéléphonie (M₁...M₃) ainsi que pour l'attribution de messages de radiotéléphonie (M₁...M₃) à des véhicules (F₁...F₃), comprenant une centrale (Z), qui est ou peut être placée en communication de radiotéléphonie avec un certain nombre de véhicules (F₁...F₃), dans lequel un locuteur respectif se trouvant dans le véhicule (F₁...F₃) indique respectivement l'identifiant (K) de son véhicule au cours du trafic de radiotéléphonie à un emplacement prédéfini, notamment au début, de chaque message de radiotéléphonie (M₁...M₃), dans lequel
a) la centrale (Z) présente une unité de reconnaissance vocale (0), qui est conçue pour enregistrer des messages de radiotéléphonie (M₁...M₃) entrants et pour transformer l'identifiant (K) annoncé contenu dans le message de radiotéléphonie (M₁...M₃) du véhicule respectif (F₁...F₃) en un identifiant numérique (K_{d}) au moyen de reconnaissance vocale,
b) la centrale (Z) présente une unité de biométrie (1), qui est conçue pour extraire, partir des messages de radiotéléphonie (M₁...M₃), auxquels ont été attribué respectivement le même identifiant numérique (K_{d}), un jeu de données de biométrie (B₁...B₃), qui caractérise la biométrie de parole du locuteur respectif et pour fournir celui-ci au niveau de sa sortie,
c) la centrale (Z) présente une unité d'attribution (5), à laquelle l'identifiant numérique (K_{d}) produit à partir de l'unité de reconnaissance vocale (0) et le jeu de données de biométrie (B₁...B₃) produit par l'unité de biométrie (1) sont transmis et qui est conçue pour attribuer l'identifiant numérique (K_{d}) produit au jeu de donnes de biométrie (B₁...B₃) produit,
d) la centrale (Z) présente une base de données (D) connectée en aval de l'unité d'attribution (5) qui est conçue pour mémoriser ensemble un jeu de données de biométrie (B₁...B₃) ainsi que l'identifiant numérique (K_{d}) qui lui est attribué dans une base de données et pour tenir à disposition pour récupération le jeu de données de biométrie (B₁...B₃) lors de l'indication de l'identifiant numérique (K_{d}) respectif et
e) dans lequel l'unité de biométrie (1) est conçue pour extraire, à partir d'un autre message de radiotéléphonie (M₄), un autre jeu de données de biométrie (B₄), qui caractérise la biométrie de parole du locuteur respectif de l'autre message de radiotéléphonie (M₄) et pour le tenir à disposition au niveau de sa sortie,
f) dans lequel la base de données (D) est connectée en aval de l'unité de biométrie (1) et est conçue pour, lors de l'application de l'autre jeu de données de biométrie (B₄) à l'entrée de la base de données (D), rechercher le jeu de données de biométrie (B₁) qui correspond au mieux à l'autre jeu de données de biométrie (B₄) et pour tenir à disposition ce jeu de données de biométrie (B₁) conjointement avec l'identifiant (K_{d}) attribué à ce jeu de données de biométrie (B₁),
**caractérisé en ce que**
g) l'unité de reconnaissance vocale (0) est conçue pour, lors de l'arrivée d'un message de radiotéléphonie (M₁, M₂) conjointement avec l'identifiant numérique (K_{d}), indiquer une probabilité (P_{S}) d'exactitude de l'identifiant déterminé (K_{d}) respectif,
h) une unité de comparaison de biométrie (2) est prévue, à laquelle le jeu de données de biométrie (B₁) produit par l'unité de biométrie (1) ainsi que l'autre jeu de données de biométrie (B₄) déterminé à partir de la base de données (D) sont transmis,
- dans lequel l'unité de comparaison de biométrie (2) est conçue pour comparer le jeu de données de biométrie (B₁) et l'autre jeu de données de biométrie (B₄) l'un à l'autre et pour évaluer les différences des deux jeux de données de biométrie (B₁, B₄) et
- dans lequel l'unité de comparaison de biométrie (2) est conçue pour déterminer et pour tenir à disposition la probabilité (P_{B}), selon laquelle le jeu de données de biométrie (B₁) et l'autre jeu de données de biométrie (B₄) proviennent du même locuteur,
i) une unité de comparaison de probabilité (3) est prévue, à laquelle la probabilité (P_{S}) déterminée par l'unité de reconnaissance vocale (0) d'exactitude de l'identifiant numérique (K_{d2}) déterminé respectif ainsi que la probabilité (P_{B}) déterminée par l'unité de comparaison de biométrie (2) sont fournies,
dans lequel l'unité de comparaison de probabilité (3) est conçue pour déterminer, laquelle des deux probabilités (P_{B}, P_{S}) qui lui sont transmises est la plus forte et pour fournir un signal (Sel) correspondant au niveau de sa sortie,
j) une unité de sélection (4) est prévue, à laquelle le signal (Sel) émis par l'unité de comparaison de probabilité (3), l'identifiant numérique (K_{d2}) déterminé par l'unité de reconnaissance vocale (0) ainsi que l'identifiant numérique (K_{d1}) déterminé à partir de la base de données (D) sont transmis et l'unité est conçue pour, sur la base du signal (Sel) qui lui est transmis, choisir et mettre à disposition au niveau de sa sortie l'identifiant numérique (K_{d1}, K_{d2}) auquel les plus fortes probabilités respectives (P_{B}, P_{S}) sont attribuées,
k) l'unité d'attribution (5) est conçue pour déterminer le nombre (n₁) des messages de radiotéléphonie (M₁, M₄) déterminés attribués à l'identifiant (K_{d}) et/ou déterminer la durée totale (t₁) des messages de radiotéléphonie (M₁, M₄) et pour les attribuer au jeu de données de biométrie (B₁) mémoriser dans la base de données (D),
I) la base de données (D) est conçue pour transmettre le nombre (n₁) et/ou la durée totale (t₁) attribués au jeu de données de biométrie (B₁) à l'unité de comparaison de biométrie (2) et
m) l'unité de comparaison de biométrie (2) est conçue pour évaluer la probabilité (P_{B}) de coïncidence reconnue, notamment au moyen de méthodes statistiques, comme d'autant plus forte que le nombre (n₁) et/ou la durée totale (t_{d}) du message de radiotéléphonie (M₁, M₂) attribué au jeu de données de biométrie (B₁) respectif avec l'identifiant numérique (K_{d}) sont élevés.

4. Système de radiotéléphonie selon la revendication 3, **caractérisé en ce que** l'unité d'attribution (5) est conçue pour, en présence d'un jeu de données de biométrie (B₄) ainsi que d'un identifiant numérique (K_{d}), pour lequel un jeu de données de biométrie (B₁) est déjà mémorisé dans la base de données (D), adapter le jeu de données mémorisé dans la base de données et attribué à l'identifiant numérique (K_{d}) au message de radiotéléphonie (M₄) nouvellement annoncé ainsi à son jeu de données de biométrie (B₄).

5. Support de données sur lequel un programme pour la réalisation d'un procédé au moyen d'un ordinateur avec un dispositif de réception pour des messages de radiotéléphonie selon une des revendications 1 ou 2 est mémorisé.
